# EUROPÄISCHE PATENTSCHRIFT

(11) **EP 2 314 440 B1**
(45) Veröffentlichungstag und Bekanntmachung des Hinweises auf die Patenterteilung: **01.01.2014**
(21) Anmeldenummer: 10182440.7
(22) Anmeldetag: 29.09.2010
(51) Int. Cl.: B29C 49/06, B29C 45/00, B29B 11/08

(54) **Verfahren und Vorrichtung zum Herstellen von Kunststoffartikeln**
Device and method for manufacturing plastic items
Procédé et dispositif de fabrication d'articles en matière plastique

(30) Priorität: 20.10.2009 DE 102009045854; 10.11.2009 DE 102009052550
(43) Veröffentlichungstag der Anmeldung: 27.04.2011
(73) Patentinhaber: Krones AG, 93073 Neutraubling (DE)
(72) Erfinder: Winzinger, Frank, 93049 Regensburg (DE)
(74) Vertreter: Grünecker, Kinkeldey, Stockmair & Schwanhäusser

(56) Entgegenhaltungen:
- EP-A2- 0 062 144
- WO-A1-03/086728
- FR-A1- 2 534 519
- GB-A- 1 490 194
- US-A- 5 906 787

## Beschreibung

Die Erfindung bezieht sich auf ein Verfahren und eine Vorrichtung zum Herstellen von Kunststoffartikeln der in den Oberbegriffen der Ansprüche 1 und 9 erläuterten Art.

Eine derartige Vorrichtung ist aus der DE 197 37 697 bekannt. Die bekannte Vorrichtung und das bekannte Verfahren betrifft die Herstellung von Kunststoffbehältern, wie sie zum Abfüllen von Getränken eingesetzt werden, also insbesondere Flaschen. Bei der Herstellung von Kunststoffbehältern ist es gängige Praxis zunächst durch Spritzgießen ein Zwischenprodukt, in Form eines sogenannten Preforms herzustellen. Dieser Preform wird anschließend durch Blasen in einer Blasform verstreckt, wodurch einerseits die Wandstärke reduziert und der Preform in die gewünschte Gestalt gebracht wird und andererseits die Molekularstruktur des Kunststoffes durch Verstrecken verfestigt wird. Dieses Blasen kann gegebenenfalls durch den Einsatz einer zum Verlängern des Preforms in axialer Richtung mechanisch einwirkenden Reckstange unterstützt werden. Kunststoffbehälter sind jedoch Massenartikel und sollten möglichst preisgünstig produziert werden. Eine Möglichkeit, die Herstellungskosten eines Kunststoffbehälters oder eines anderen Kunststoffartikels zu reduzieren, besteht darin, den Materialeinsatz, der zur Herstellung des Kunststoffartikels notwendig ist, zu verringern. Diesem sind jedoch Grenzen gesetzt, da der Kunststoffartikel nach wie vor die notwendige Festigkeit aufweisen muss.

US5906787 zeigt eine Vorrichtung und ein Verfahren zur Herstellung von Kunststoffartikeln wobei eine Verstreckeinrichtung eingesetzt wird.

Der Erfindung liegt die Aufgabe zugrunde, ein Verfahren und eine Vorrichtung zur Reduzierung des Materialeinsatzes ohne Festigkeitsverlust bereitzustellen.

Durch die erfindungsgemäße Ausgestaltung kann ein wesentlich höherer Verstreckungsgrad erreicht werden, als dies bei den bisherigen Herstellungsschritten möglich ist. Außerdem kann die erfindungsgemäße Scherbelastung des Kunststoffartikels für eine Verstreckung sehr effektiv durchgeführt werden, so dass auf einfache Weise eine Erhöhung der Stabilität im Material und somit eine geringere Wanddicke realisiert werden kann und Material eingespart wird.

Die aufgabe wird durch die Merkmale der Ansprüche 1 und 5 gelöst.

Vorteilhafte Weiterbildungen sind den Unteransprüchen zu entnehmen.

Schließlich kann die Verstreckung durch Einleiten von Scherkräften auch dazu benutzt werden, ein bestimmtes Wärmeprofil am Werkstück zu realisieren, indem die Behandlungseinrichtung mit einem Heiz- und/oder Kühlkreislauf verbunden ist.

Ausführungsbeispiele der Erfindung werden nachfolgend anhand der Zeichnungen näher erläutert. Es zeigen:
- Fig. 1: eine schematische Darstellung eines Ausführungsbeispiels einer erfindungs- gemäß ausgestalteten Vorrichtung zum Herstellen von Kunststoffartikeln,
- Fig. 2: eine schematische, perspektivische Teildarstellung einer erfindungsgemäßen Streckvorrichtung,
- Fig. 3: einen Längsschnitt durch beide Behandlungseinheiten und das Zwischenpro- dukt des Streckwerkzeuges gemäß Fig. 2,
- Fig. 4A: ein weiteres Ausführungsbeispiel eines erfindungsgemäßen Streckwerkzeu- ges,
- Fig. 4B: das Streckwerkzeug gemäß Fig. 4A im Betrieb,
- Fig. 5: ein weiteres Ausführungsbeispiel eines erfindungsgemäßen Streckwerkzeu- ges,
- Fig. 6: eine Darstellung der erfindungsgemäßen Krafteinleitung,
- Fig. 7: eine schematische Darstellung eines weiteren Ausführungsbeispiels einer er- findungsgemäßen Vorrichtung zum Herstellen von Kunststoffartikeln,

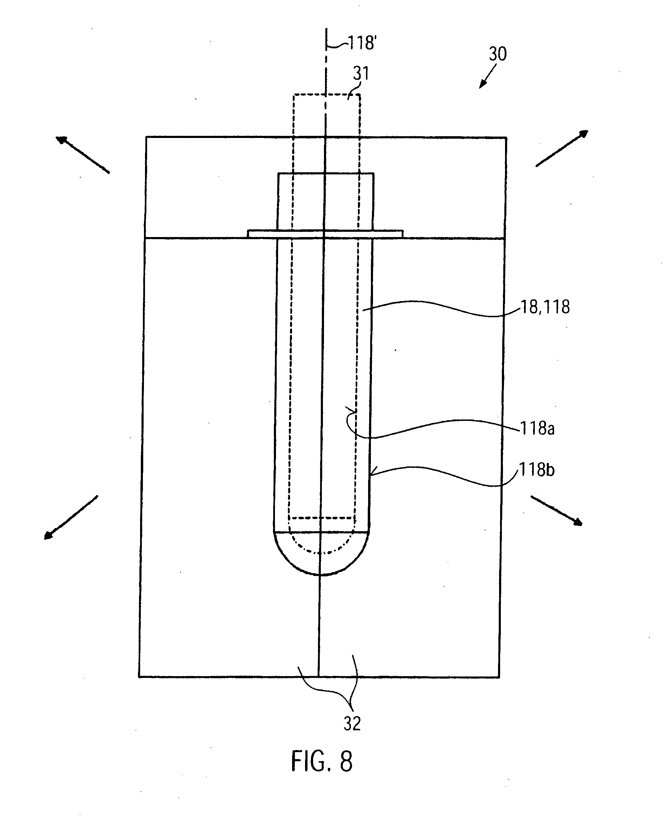

- Fig. 8: ein weiteres Ausführungsbeispiel eines erfindungsgemäßen Streckwerkzeu- ges,
- Fig. 9: ein weiteres Ausführungsbeispiel eines Zwischenprodukts,
- Fig. 10: ein weiteres Ausführungsbeispiel eines erfindungsgemäßen Streckwerkzeu- ges,
- Fig. 10A: eine Einzelheit aus Fig. 10, und

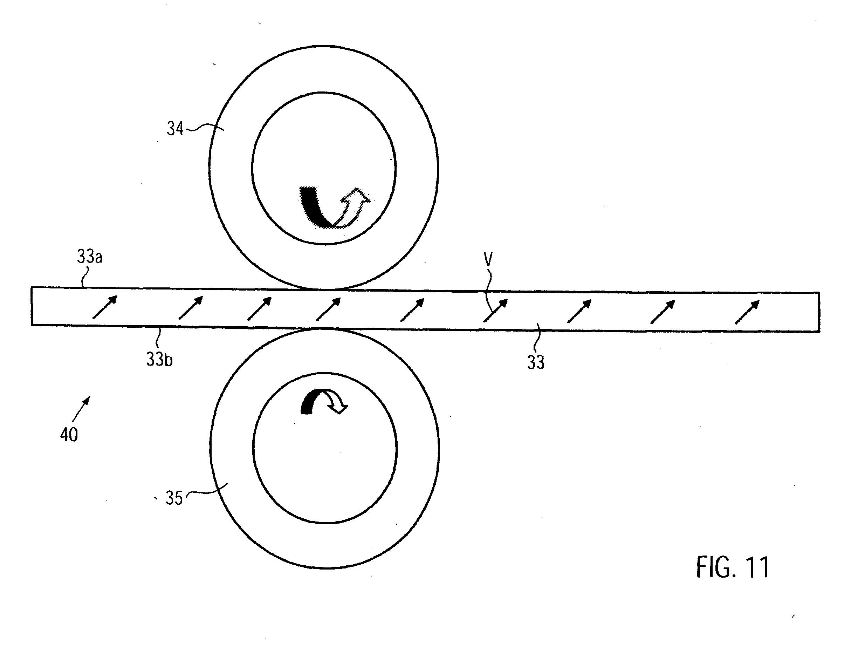

- Fig. 11: ein weiteres Ausführungsbeispiel einer erfindungsgemäßen Vorrichtung zum Herstellen von Kunststoffartikeln.

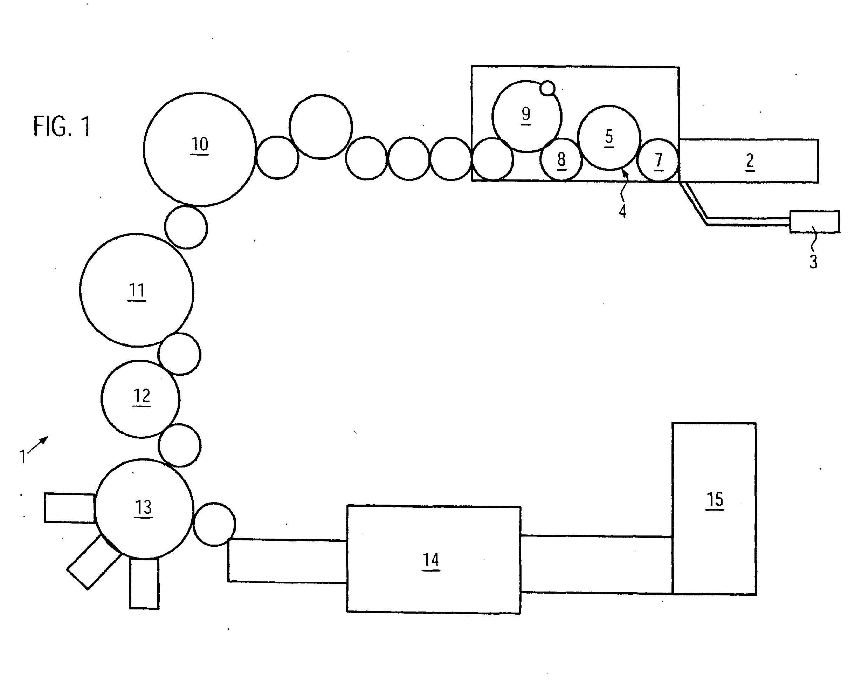

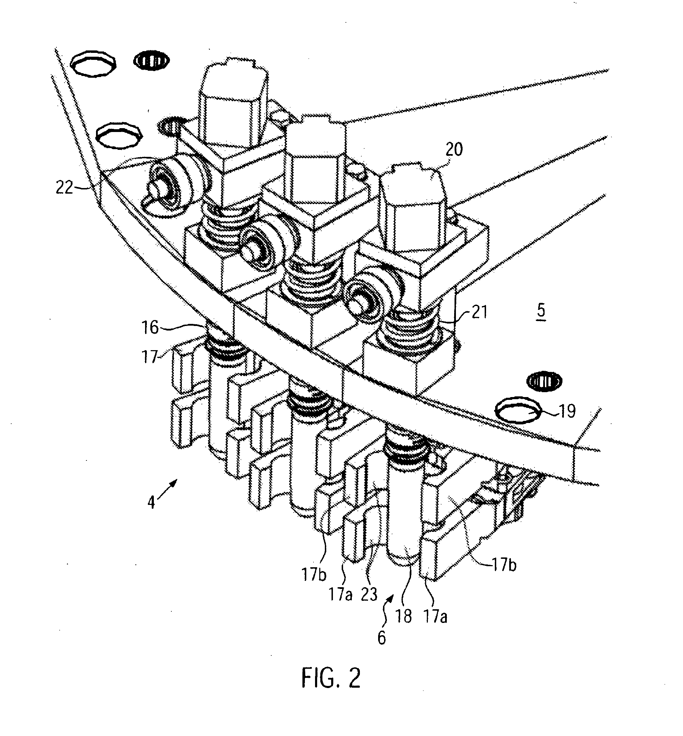

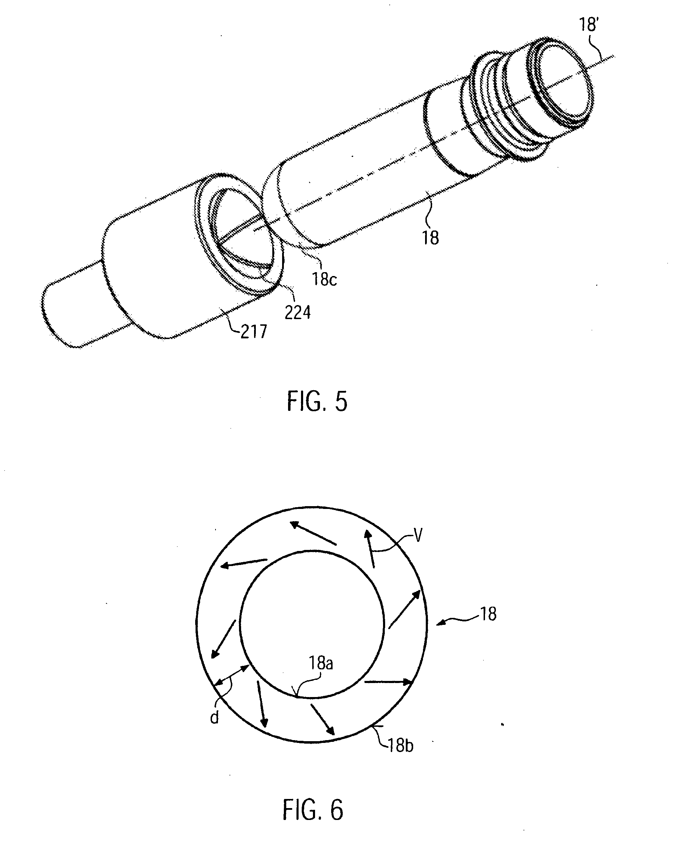

Fig. 1 zeigt ein Ausführungsbeispiel einer erfindungsgemäßen Vorrichtung 1 zum Herstellen von Kunststoffartikeln, und zwar Behälter bzw. Flaschen für die Getränkeabfüllung unter Verwendung von Zwischenprodukten. Zwischenprodukte können z. B, Preforms unterschiedlicher Ausgestaltung (siehe Fig. 2 Preform 18, oder Fig. 6 - Preform 118) oder bereits bis auf die erfindungsgemäße Behandlung fertiggestellte Kunstoffartikel sein. Die für den erfindungsgemäßen Prozess geeigneten Kunststoffartikel können neben dem bevorzugten PET, auch z.B. PLA, PP, PA, HDPE, Polystyrol (PS), Polyethylen (PE), Ethylenvenylalkohol (EVOH), Ethylenvenylidenchlorid, Ethylenvenylacetatkopulimäre (EVA/PE), Polycarbonat (PC), Polyvinylchlorid (PVC), Polyethylennaphthalat (PEN), biologisch abbaubare Polymere, Cellulose und Cellulosederivate und native Polymere, wie Zellglas und eiweiß- und stärkehaltige Polymere, sowie Copolymere oder Mischungen dieser Kunststoffe sein. Vorstellbar wären auch Kunststoffschichten oder -einlagen von Schichtverbundsystemen mit Papier, Pappe, Karton oder Schichtverbundsystemen der oben genannten Kunststoffe.

Die Vorrichtung 1 arbeitet nach dem Zweistufenprozess, d. h. die Zwischenprodukte werden nach dem Spritzformen und vor dem endgültigen Ausformen abgekühlt, und ist hier nur teilweise dargestellt. Sie weist einen Ofen 2 (Infrarot oder Mikrowelle oder dgl.) auf, dem die bereits vorgefertigte Zwischenprodukte über eine Zufuhrförderung 3 zugeführt werden. Im Ofen 2 werden die Zwischenprodukte auf eine materialabhängige Verformungs- und Verstreckungstemperatur gebracht, die oberhalb der Glasübergangstemperatur des speziellen Kunststoffes liegt. Im Falle des üblicherweise für Kunststoffflaschen verwendeten PET liegt die Glasübergangstemperatur bei etwa 65°, wobei zum Verstrecken und Ausformen eine Temperatur zwischen 80°C und 85°C optimal ist, die Temperatur jedoch nicht über 140°C ansteigen sollte. Ein bevorzugter Temperaturbereich für das Verstrecken liegt zwischen 80°C und 120°C für PET

An den Ofen 2 schließt sich eine Streckvorrichtung 4 zur Durchführung des erfindungsgemäßen Verfahrens an. Im dargestellten Ausführungsbeispiel ist die Streckvorrichtung 4 als Modul ausgebildet und enthält einen, in Fig. 2 näher dargestellten Sternförderer 5, der um eine senkrechte, mittige Achse drehbar angetrieben ist und an dessen Umfang eine Vielzahl von Streckwerkzeugen 6 vorgesehen sind.

Die Zwischenprodukte aus dem Ofen 2 gelangen über einen Förderrotor 7 auf den Stern 5 der Streckvorrichtung 4 und gelangen vom Stern 5 über einen weiteren Förderrotor 8 auf einen Blasstern 9, die alle in üblicher Weise ausgebildet sind. An diesen Blasstern, der ebenfalls als Blasmodul ausgebildet ist, schließen sich weitere Behandlungsstufen und Behandlungsvorrichtungen, beispielsweise ein Rinser 10, ein Füller 11 und ein Verschließer 12 an. Anschließend folgt ein Etikettierer 13, ein Packer 14 und ein Palettierer 15.

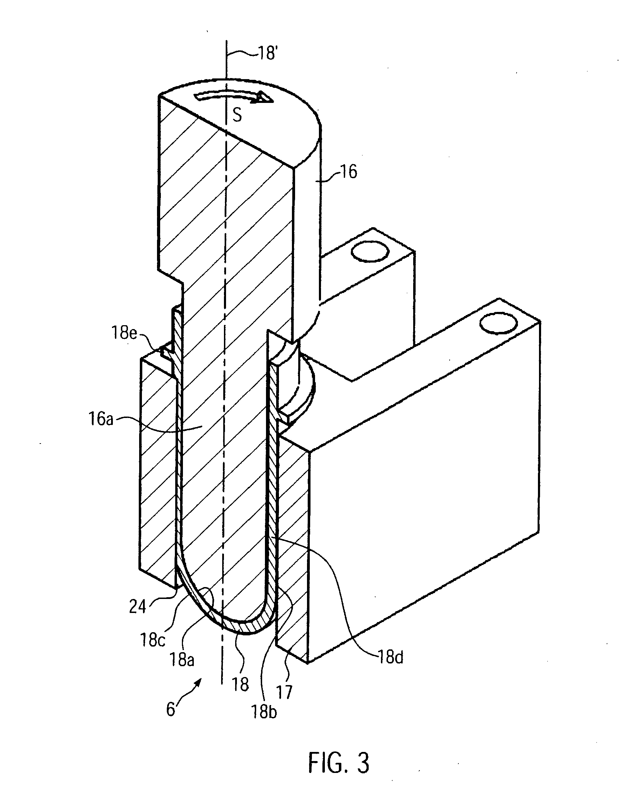

Wie die Fig. 2 und 3 zeigen, enthält jedes Streckwerkzeug 6 eine erste Behandlungseinheit 16 und eine zweite Behandlungseinheit 17, die relativ zueinander bewegbar sind. Die erste Behandlungseinheit 16 ist als Dorn ausgebildet oder enthält zumindest einen Dornbereich 16a, der sich in den Innenraum eines Preforms 18 üblicher Gestalt erstreckt und mit seinem Dornbereich 16a den Innenraum derart ausfüllt, dass er zumindest teilweise, im dargestellten Ausführungsbeispiel vollflächig (d. h. am Boden 18c und im zylindrischen Bereich 18d bis in das Mundstück 18e), an der Innenoberfläche 18a des Preforms 18 anliegt. Die erste Behandlungseinheit, oder eine Fortsetzung davon, erstreckt sich durch eine Öffnung 19 im Stern 5 und ist mit einem Antrieb 20 (z. B. Servomotor) verbunden, der die erste Behandlungseinheit 16 zumindest im Dornbereich 16a, in Richtung des Pfeils S dreht. Es ist weiterhin eine Feder 21 vorgesehen, die die erste Behandlungseinheit in Richtung ihrer Mittelachse 18' vorspannt. Über eine Kurvenrolle 22 kann die erste Behandlungseinheit 16 in den Preform 18 eingesenkt und aus dem Preform 18 wieder entfernt werden.

Die zweite Behandlungseinheit 17 ist als Klammer ausgebildet, die in Fig. 2 in eine untere Klammer 17a und eine obere Klammer 17b geteilt ist, in Fig. 3 jedoch einstückig ausgebildet ist. Die Klammer 17a, 17b enthält einen Klammerhohlraum 23, der sich zumindest in dem zu verstreckenden Bereich, in Fig. 3 über den zylindrischen Teil 18d des Preforms 18 außerhalb des Bodens 18c und des Mundstücks 18e , an die Außenoberfläche 18b des Preforms 18 anlegt.

Die beiden Behandlungseinheiten 16 und 17 wirken derart zusammen, dass in geschlossenem Zustand der Klammer 17 eine Ankoppelung der Behandlungseinheiten 16 bzw. 17 an die Innen- und Außenoberflächen 18a, 18b zwecks Kraftübertragung stattfindet. Diese Ankoppelung erfolgt bevorzugt und überwiegend durch Reibung, es kann jedoch auch eine formschlüssige Ankoppelung verwirklicht werden, beispielsweise über sich in das Material des Preforms 18 eindrückende Stege 24, die sich in Richtung der Achse 18' des Preforms 18 erstrecken und in Fig. 3 nur beispielhaft gezeigt sind. Die Stege können an einer oder an beiden Behandlungseinheiten vorgesehen werden. Zweckmäßigerweise übt die Klammer 17 einen bestimmten Anpressdruck auf den Preform 18 aus, so dass sowohl der Formschluss als auch der Reibschluss für eine Mitnahme ausreichend fest sind, was im dargestellten Ausführungsbeispiel z. B. durch angelegte Vakuumkissen erfolgen kann. Wird nun das erste (und/oder das zweite) Behandlungselement 16 in Drehung S versetzt, so werden die jeweils mit den Behandlungselementen 16 und 17 in Kontakt stehenden Oberflächenschichten des Preforms 18 durch Scherkrafteinleitung gegeneinander verschoben, so dass sich die in Fig. 6 dargestellte Verstreckungsrichtung V in der Materialdicke d ergibt. Auf diese Weise werden Schichten innerhalb der Materialdicke d relativ zueinander verschoben, so dass von einer Schichtverstreckung gesprochen werden kann. Das Ausmaß der Relativbewegung hängt von der zu erreichenden Wandstärke ab, gewöhnlich reicht eine Relativdrehung um einen Winkelbereich von weniger als 60°, bevorzugt weniger als 30°, und besonders bevorzugt zwischen 5° und 15° aus.

Die Verstreckung kann auch nur über einen Teil der Oberfläche in Axialrichtung des Preforms 18 erfolgen, z.B. dadurch, dass nur eine der Klammern 17a oder 17b kraftübertragend angekoppelt wird.

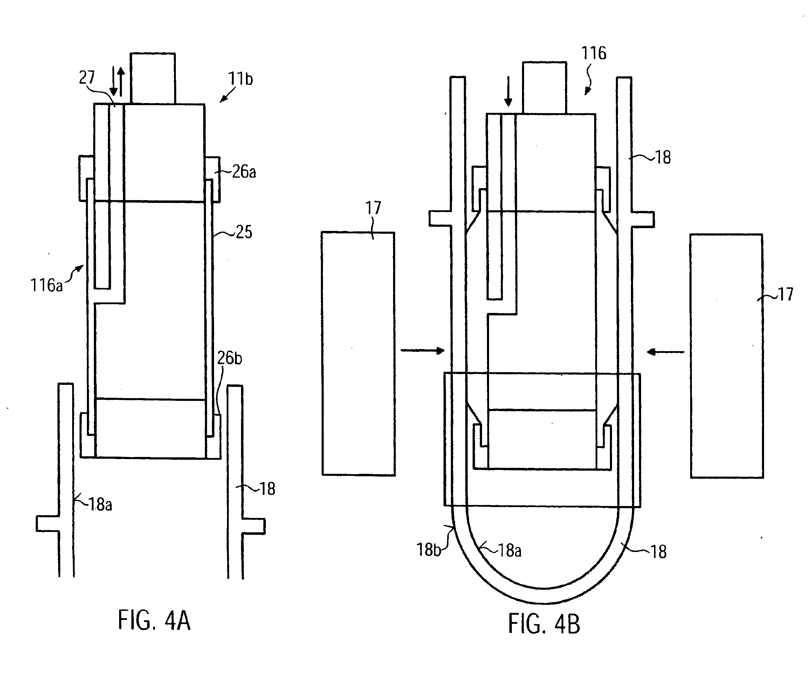

Um die Ankoppelung an die Oberflächen 18a, 18b des Preforms zu erleichtern, ist es beispielsweise denkbar, das erste Behandlungselement 16 spreizbar auszubilden, also beispielsweise mit radial bewegbaren Umfangsbacken oder dgl. zu versehen. So könnte ein von einer zusätzlichen Kurvenrolle separat angesteuerter Dorn als Nocke wirken und im Inneren des ersten Behandlungselements 16 durch axiales Verschieben die radial bewegbaren Umfangsbacken nach außen treiben. Der Dorn wäre bevorzugt federnd zum Behandlungselement angebracht. Auch eine aufblasbare Ausgestaltung, wie Fig. 4 zeigt, ist möglich.

Fig. 4 zeigt ein derartig modifiziertes erstes Behandlungselement 116, das wiederum mit einem Dornbereich 116a ausgebildet ist und ebenso wie das erste Ausführungsbeispiel drehbar sein kann. Am Umfang des ersten Behandlungselementes 116 ist ein Ballon 25 vorgesehen, der als Zylinderhülse ausgebildet und über Spannklammern 26a, 26b befestigt ist und sich über den mit der Innenoberfläche 18a im Bereich des zylindrischen Teils 18d des Preforms 18 in Kontakt kommenden Bereich des Dorns 116a erstreckt. Der Ballon 25 wird mittels gasförmiger oder flüssiger Medien aufgeblasen, die über einen Kanal 27 eingeleitet werden, bis er sich, wie in Fig. 4B gezeigt, an die Innenoberfläche 18a des Preforms 18 im mittleren, zylindrischen Bereich anlegt. Wird dann die Klammer 17 geschlossen, wird, ein entsprechender Druck des Mediums vorausgesetzt, eine reine reibschlüssige Ankoppelung der Behandlungselemente 116 und 17 an die Innen- und Außenoberflächen des Preforms 18 für eine optimale Scherkraftübertragung erreicht. Das Medium kann über einen nicht gezeigten Drehverteiler im Falle eines Sternförderers an die einzelnen Behandlungselemente 116 über Leitungen verteilt werden. Bevorzugt ist das Medium auf 50°C bis 100°C temperiert. Somit wird das in einer Vorheizung aufgetragene Wärmeprofil nicht so sehr beeinträchtigt. Denkbar wäre auch über mehrere an den Behandlungselementen 116 angebrachte Ballone 25 erst eine Temperaturprofilierung auf den Preform 18 aufzubringen. Somit könnte man auf eine aufwendige Profilierung beim Vorheizen verzichten. Dabei sind nicht nur mehrere, in Längsrichtung des Preforms 18 verteilte, temperierte Ballone 25 denkbar, sondern auch in Umfangsrichtung verteilte Ballone 25, um sogenanntes Preferential Heating betreiben zu können. Bevorzugt sind die mehreren Ballone 25 in Umfangsrichtung oder in Längsrichtung des Preform 18 unterschiedlich temperiert.

Ein weiteres Ausführungsbeispiel eines erfindungsgemäßen Streckwerkzeuges zeigt Fig. 5, wobei hier nur eine Schichtverstreckung am Boden des Preforms 18 erreicht werden soll, da in diesem Bereich die Wandstärkenverteilung besonders wichtig ist. Zu diesem Zweck ist das zweite Behandlungselement 217 eine Bodenform, die zusätzlich oder alternativ zu den bereits beschriebenen Klammern 17 vorgesehen sein kann. Die Bodenform 217 ist an die Form des Bodens 18c des Preform 18 angepasst und weist im dargestellte Ausführungsbeispiel formschlüssig in das Material des Bodens 18c eindrückbare Stege 224 auf, die in der Mittellinie 18' des Preforms 18 zusammenlaufen. Diese Rippen oder Stege 224 können neben der formschlüssigen Unterstützung der Ankoppelung der Scherkrafteinleitung auch zur Schaffung einer Einkerbung dienen, um die Bodenstabilität der späteren Flasche an diesen Stellen zu erhöhen. Auch in diesem Ausführungsbeispiel ist ein erstes Behandlungselement 16 vorgesehen, jedoch aus Übersichtlichkeitsgründen nicht dargestellt.

Die Erfindung ist jedoch nicht nur durch eine gesonderte Streckvorrichtung 4 zu verwirklichen, sondern kann auch in herkömmliche Fertigungseinrichtungen integriert werden, wobei ggf. deren Werkzeuge oder Halterungen entsprechend modifiziert werden.

So kann z. B. das zweite Behandlungselement 217 aus Fig. 5 als Teil einer Bodenform in einer Blasform einer herkömmlichen Blaseinrichtung 9 ausgebildet sein. Die Scherung findet zwischen einem durch eine Mündung des Behältnisses eingebrachten Dorn, der auch als Reckstange zur Längsverstreckung des Preforms 18 dienen kann, und einem Bodenteil der Blasform 217 statt. Hierbei wird entweder der Dorn oder ein innerer Teil der Bodenform 217, die der in dem Fall vorteilhaft mindestens zweiteilig ausgebildet ist, gedreht. In einer Ausführungsform können auch beide Werkzeuge entgegengesetzt gedreht werden. Auf diese Weise ist es möglich, nur den kritischen Bereich des Bodens des fertigen Behälters durch Scherung zu verstrecken. Der für einen Preform typische Anspritzpunkt im Zentralbereich des Bodens kann von einem Kontakt der Behandlungselemente 217 durch eine Ausnehmung in einem oder beiden Behandlungselementen 217 ausgenommen werden.

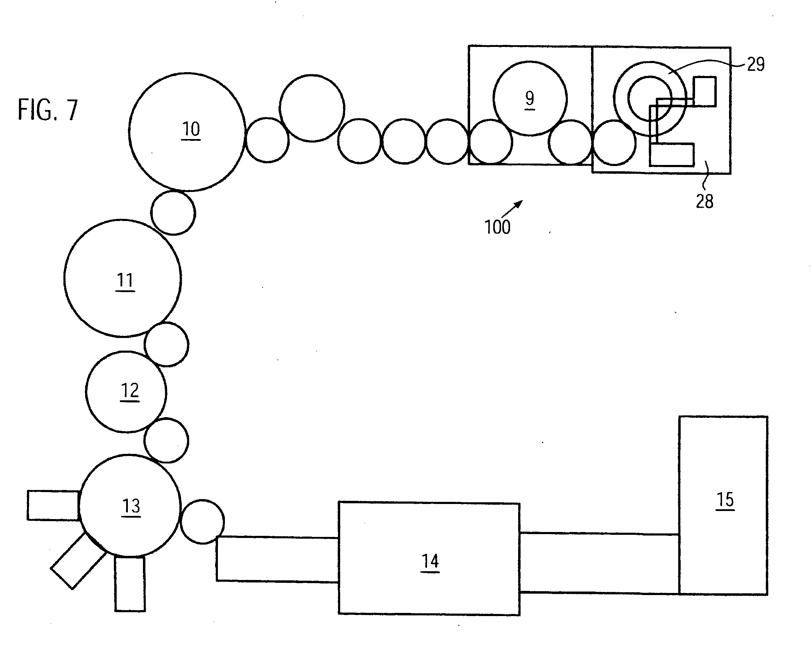

Weiterhin kann das erfindungsgemäße Streckwerkzeug in eine Spritzeinrichtung 28 zum Herstellen der Zwischenprodukte, also beispielsweise der Preforms 18, integriert werden. Fig. 7 zeigt eine Vorrichtung 100 zum Herstellen von Kunststoffartikel in einem Einstufenprozess, d.h. "frisch gespritzte" Preforms werden mit der noch vorhandenen Spritzwärme direkt an die Blaseinrichtung weitergegeben, um das nochmalige Erwärmen einzusparen. Zum Durchführen der Erfindung müsste die Spritzvorrichtung 28, die hier einen Spritzstern 29 enthält, entsprechend modifiziert werden.

Am Spritzstern 29 sind umfangsseitig eine Vielzahl von Spritzformen 30 angeordnet, die aus einer dornartigen Innenform 31 und einer geteilten und zu öffnenden Außenform 32 bestehen. Zur Durchführung des erfindungsgemäßen Verfahrens müssten lediglich Vorkehrungen getroffen werden, die es gestatten, die Außen- und die Innenform in der bereits beschriebenen Art und Weise an den sich entsprechend abgekühlten Preform anzukoppeln und entweder die Außen- (bevorzugt) oder die Innenform zu drehen, sobald das sich in der Spritzform befindliche Material auf eine optimale Verstrecktemperatur abgekühlt hat. Wie oben beschrieben, liegt auch bei dieser Vorgehensweise die optimale Verstrecktemperatur oberhalb der Glasübergangstemperatur und unterhalb der Übergangstemperatur in den kristallinen Zustand, also beispielsweise für PET zwischen 80°C und 120°C.

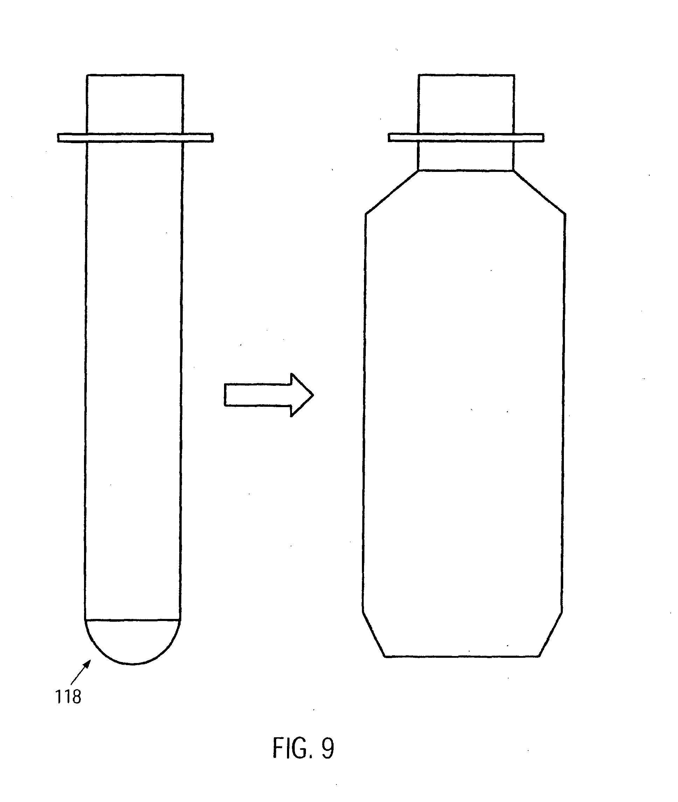

Insbesondere in der Spritzvorrichtung können die Spritzformen so ausgestaltet sein, dass der in Fig. 9 dargestellte Preform 118 eine Länge von mindestens 60%, bevorzugt mindestens 80% von der Länge des späteren Behälters erhält um auf eine zusätzliche Längsverstreckung durch Recken verzichten zu können.

In diesem und in anderen Fällen einer scherenden Verstreckung vor dem Blasprozess kann eine axiale Länge der Prefoms in der Art gewählt werden, dass ein Verstrecken in Längsrichtung durch eine im Zweistufenverfahren übliche Reckstange nicht mehr nötig ist. Die Verstreckung erfolgt in dem Fall ausschließlich durch Scherung nur in axialer Richtung (Hub) oder zumindest mit einer axialen Komponente, sowie in radialer Richtung durch ein Aufblasen gegen eine Formwand. Die Länge der Preforms beträgt dann ebenfalls mindestens 60%, bevorzugt mindestens 80% von der Länge des späteren Behälters.

Aus der Spritzvorrichtung 28 wird dann der verstreckte Preform, wie bei der Vorrichtung gemäß Fig. 1, der Blasvorrichtung 9 übergeben, die wiederum mit oder ohne Reckvorrichtung arbeiten kann, und gelangt dann über Rinser 10, Füller 11, Verschließer 12, Etikettierer 13 zum Packer 14 und zum Palettierer 15.

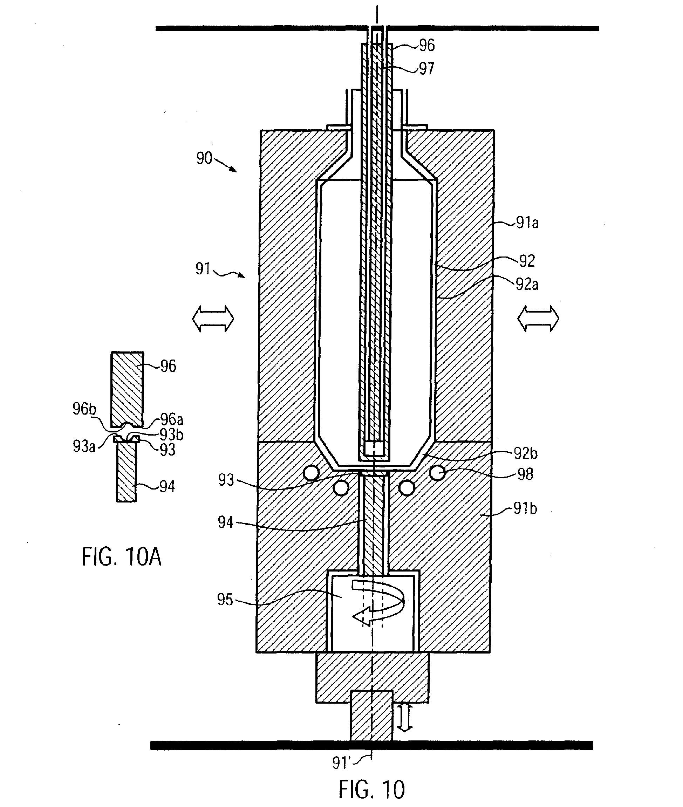

Die Erfindung kann jedoch auch in eine Blasvorrichtung integriert werden, indem die Blasformen erfindungsgemäß modifiziert werden. Eine derartig modifizierte Blasform 90 ist in Fig. 10 gezeigt. Die Blasform 90 enthält die übliche, vertikal geteilte Außenform 91, die einen Hohlraum 92 umschließt, der der Außenform des fertigen Behälters entspricht. Die Außenform 91 ist im dargestellten Ausführungsbeispiel weiterhin quer zu ihrer Mittelachse 91' in einen oberen Bereich 91 a und einen unteren Bereich 91 b geteilt. Der untere Bereich 91 b weist den Hohlraumbereich 92b auf, der dem Bodenbereich des fertigen Behälters entspricht. Der obere Bereich 91a der Außenform enthält den Bereich 92a des Hohlraums, der dem Seitenwandungsbereich des Behälters entspricht. Die gesamte Außenform 91 kann geöffnet werden, um einen Preform 18 einzusetzen und den fertig geblasenen Behälter zu entnehmen.

Der Hohlraum 92b im Bodenbereich wird von einem beweglichen Wandungsteil 93 begrenzt, das in Form eines Tellers ausgebildet ist. Im dargestellten Ausführungsbeispiel ist der Teller 93 symmetrisch um die Mittelachse 91' angeordnet und mit einer Welle 94 verbunden, die über einen Antrieb 95, bevorzugt ein Servomotor, in Drehung versetzt werden kann.

In den Hohlraum 92 der Blasform 90 wird in üblicher Weise eine Reckstange 96 eingeführt. Diese Reckstange unterstützt das Verstrecken des Preforms in Richtung der Mittellinie 91', während durch in üblicher Weise eingeführte Blasgase, wie beispielsweise Luft, eine überwiegend radiale Verstreckung erfolgt. Im dargestellten Ausführungsbeispiel ist sowohl die Reckstange 96 als auch der untere Bereich der Blasform mit einer Möglichkeit zum Temperieren versehen, also beispielsweise mit Leitungen 97 und Bohrungen 98, durch die ein Temperiermedium, bevorzugt ein Kühlmedium, geleitet werden können. Dieses könnte jedoch auch ein warmes Medium sein, wenn das zu verstreckende Material durch eine Abkühlung beim Blasprozess den Blasprozess unterhalb der Glasübergangstemperatur liegt. Im letzteren Fall ist eine Temperatur von über 70°C bevorzugt.

Wie Fig. 10A zeigt, ist zwischen den einander zugewandten Stirnseiten 93a, 96a der Reckstange 96 und des Tellers 93 eine Profilierung vorgesehen, die im dargestellten Ausführungsbeispiel jeweils zwei komplementäre halbkugel- oder kugelkalottenförmige Einprägungen 93b, 96b enthält. In diesen Einprägungen wird Material des Bodens des Preforms (z.B, der Spritzansatz) und des späteren Behälters eingeschlossen, wenn sich die Reckstange 96 als erstes Behandlungselement an die Innenseite des Preforms bzw. des Behälters, und der Teller 93 als zweites Behandlungselement an dessen Außenseite anlegt. Befinden sich die beiden Stirnseiten 96a bzw. 93a im Abstand der späteren Wandstärke des Behälters gegenüber, und ist der Behälter auch in radialer Richtung fertiggeblasen, so wird der Teller 93 in Drehung versetzt, wodurch eine Scherkraft in die Wandung des Bodens eingeleitet. Der Anpressdruck der beiden Behandlungselemente in axialer Richtung kann entweder von einem nicht gezeigten Reckstangenantrieb oder einem nicht gezeigtem zusätzlichen antrieb für den Teller 93 initiiert werden.

Statt den Teller 93 zu drehen, kann jedoch auch die Reckstange 96 gedreht werden; oder Reckstange 96 und Teller 93 werden relativ zueinander in unterschiedlichen Drehrichtungen verdreht.

In diesem Ausführungsbeispiel werden Teile des Behälters zuerst biaxial und darauffolgend durch Scherung verstreckt.

Die Erfindung ist jedoch auch dann durchzuführen, wenn die Scherkrafteinleitung nicht durch eine Relativverdrehung der beiden Behandlungseinheiten zueinander, sondern alternativ oder zusätzlich auch durch eine Axialverschiebung entlang der Mittellinie 18' des Preforms 18 erfolgt. Auch durch diese Maßnahme ist es möglich, die der Innen- und der Außenoberfläche des Preforms anliegenden Schichten durch Einleitung von Scherkräften relativ zueinander zu verstrecken. Es ist weiterhin möglich, beide Behandlungseinheiten in entgegen gesetzte Richtungen zu verdrehen und/oder axial zu verschieben Insbesondere bei einer gesondert vorgesehenen Verstreckeinrichtung 4, aber auch bei einer modifizierten Spritzeinrichtung 28, oder einer modifizierten Blaseinrichtung könnte es zweckmäßig sein, eines oder beide der Behandlungseinheiten mit einem Kreislauf für ein Wärmeübertragungsmedium, also beispielsweise ein Heiz- oder Kühlmedium, zu verbinden, durch den die entsprechende Behandlungseinheit vollständig oder teilweise erwärmt oder gekühlt werden kann, so dass ein Temperaturprofil mit oder ohne unterschiedlichen Abstufungen verwirklicht werden kann. So kann beispielsweise das Werkzeug 6 für das sogenannte "preferential heating" eingesetzt werden, bei dem bestimmte Wandungsbereiche unterschiedliche Temperaturen erhalten, so dass sie zu unterschiedlichen Wandstärken ausgezogen werden können, also eine erhöhte Temperatur für eine dünnere Wandstärke und eine niedrigere Temperatur für eine höhere Wandstärke. Bevorzugt beträgt die Temperatur des Wärmeübertragungsmediums zwischen 50°C und 100°C. Das Medium ist bevorzugt Luft oder Wasser, bei höheren Temperaturen ab 90°C bevorzugt Öl.

Zur Erhöhung der Reibung können die entsprechenden Oberflächen an den Behandlungseinheiten aufgeraut oder mit einer reibungserhöhenden Beschichtung oder dgl. versehen sein. Auch der Einsatz von temperaturbeständigen, gummiartigen Materialien ist möglich.

Für eine Scherung über formschlüssig angekoppelte Behandlungseinheiten wäre es auch denkbar, Angriffspunkte, z.B. Rippen, in den Preform zu Spritzen. Diese würden einerseits als zusätzliche Verstärkung des späteren Behälters als auch als Behälterdesignmerkmal dienen.

Ein weiteres Anwendungsgebiet bei der Herstellung von Kunststoffartikeln, insbesondere von Verpackungsfolie, zeigt Fig. 10. Fig. 10 zeigt eine Verstreckeinrichtung 40 zum Verstrecken einer Folie 33 als Zwischenprodukt, das jedoch, bis auf das Verstrecken, bereits fertiggestellt wurde. Die Folie 33 wird zum Einleiten von Scherkräften zwischen einer ersten Behandlungseinheit 34 und einer zweiten Behandlungseinheit 35 durchgeleitet, wobei die Behandlungseinheiten als Walzen ausgebildet sind und reibschlüssig an die gegenüberliegenden Oberflächen der Folie 33 ankoppeln. Die Walzen 34 und 35 weisen eine unterschiedliche Umfangsgeschwindigkeit auf, so dass die Folie 30, wie durch die Pfeile angedeutet, einer Schichtverstreckung V über die Materialdicke d unterworfen wird. Zusätzlich kann auch eine kombinierte Axialbewegung einer oder beider Walzen vorgesehen werden, was zu einer weiteren Verstreckung führt. Ansonsten wird das Verfahren nach Fig. 10 analog zum Verstrecken der Preforms durchgeführt. Dieser Schritt erfolgt bevorzugt vor der Verstreckung der Folie 33 in Querrichtung, um die Länge der Walzen 34, 35 entsprechend klein zu halten. Wenn man diesen Schritt auch vor der Längsverstreckung der Folien 33 einsetzt, so steht eine dickere Schicht zur Verfügung. Bevorzugt beträgt die Umfangsgeschwindigkeit einer der beiden Walzen 34, 35 mehr als das 1,5-Fache, besonders bevorzugt mehr als das 2-Fache, der der anderen.

## Patentansprüche

1. Vorrichtung (1, 100) zum Herstellen von Kunststoffartikeln, insbesondere Verpackungen, mit einer Fertigungseinrichtung für ein vorgefertigtes Zwischenprodukt (18, 118, 33) und einer Verstreckeinrichtung,
aufweisend eine für eine Scherkrafteinleitung aus gebildete Verstreckeinrichtung (4, 28) mit einer ersten, an einer Oberfläche (18a, 118a, 33a) des Zwischenproduktes (18, 118, 33) angreifenden, ersten Behandlungseinheit (16, 116, 31, 34, 93) und einer zweiten, an einer gegenüberliegenden Oberfläche (18b, 118b, 33b) angreifenden, zweiten Behandlungseinheit (17, 217, 32, 35, 96), die relativ zueinander bewegbar sind,
wobei zum Herstellen eines Kunststoffbehälters ein Preform (18, 118) mit einer Mittelachse (18', 118') sowie einer Innen- und einer Außenoberfläche (18a, 18b, 118a, 118b), eine zumindest teilweise an der Innenoberfläche (18a, 118a) angreifende, erste Behandlungseinheit (16, 116, 31, 96) und eine zumindest teilweise an der Außenoberfläche (18b, 118b) anliegende, zweite Behandlungseinheit (17, 217, 32, 93) vorgesehen sind, die relativ zueinander um die Mittelachse (18', 118') verdrehbar sind,
wobei die erste Behandlungseinheit (16, 116, 31, 96) ein an der Innenoberfläche (18a, 118a) anliegendes, bewegbares Dornelement und die zweite Behandlungseinheit (17, 217, 32, 93) eine an die Außenoberfläche (18b, 118b) anpressbare Form ist, und
wobei die Vorrichtung in Transportrichtung der Preforms bzw. der Kunststoffartikel vor einer Vorrichtung zum Blasformen angeordnet ist,
**dadurch gekennzeichnet, dass** das Dornelement spreizbar ist.

2. Vorrichtung nach Anspruch 1, **dadurch gekennzeichnet, dass** zum Herstellen eines Kunststoffbehälters ein Preform (18, 118) mit einer Mittelachse (18', 118') sowie einer Innen- und einer Außenoberfläche (18a, 18b, 118a, 118b), eine zumindest teilweise an der Innenoberfläche (18a, 118a) angreifende erste Behandlungseinheit (16, 116, 31) und eine zumindest teilweise an der Außenoberfläche (18b, 118b) anliegende zweite Behandlungseinheit (17, 217, 32) vorgesehen sind, die entlang der Mittelachse (18') relativ zueinander verschiebbar sind.

3. Vorrichtung nach Anspruch 1 oder 2, **dadurch gekennzeichnet, dass** die erste Behandlungseinheit (31) eine Innenform eines Spritzgusswerkzeuges und die zweite Behandlungseinheit (32) eine Außenform des Spritzgusswerkzeuges ist, wobei Innenform und Außenform relativ zueinander bewegbar, bevorzugt verdrehbar, sind.

4. Vorrichtung nach einem der Ansprüche 1 bis 3, **dadurch gekennzeichnet, dass** wenigstens eine Behandlungseinheit (16, 17, 116, 217, 31, 32, 34, 35, 93, 96) mit einem Heiz- und/oder Kühlkreislauf zur Temperierung des Zwischenproduktes (18, 118, 33) verbunden ist.

5. Verfahren zum Herstellen von Kunststoffartikeln, insbesondere Verpackungen, **dadurch gekennzeichnet, dass** eine Vorrichtung gemäß einem der Ansprüche 1 bis 4 zur Durchführung des Verfahrens verwendet wird.

6. Verfahren nach Anspruch 5, **dadurch gekennzeichnet, dass** die Scherkrafteinleitung durch eine Relativbewegung von an gegenüberliegenden Oberflächen des Zwischenproduktes (18, 118, 33) reibschlüssig angekoppelte Behandlungseinheiten (16, 17, 116, 217, 31, 32, 34, 35, 93, 96) erfolgt.

7. Verfahren nach Anspruch 5 oder 6, **dadurch gekennzeichnet, dass** die Scherkrafteinleitung durch eine Relativbewegung von an gegenüberliegenden Oberflächen des Zwischenproduktes (18, 118, 33) formschlüssig angekoppelte Behandlungseinheiten (16, 17, 116, 217, 31, 32, 34, 35, 93, 96) erfolgt.

8. Verfahren nach Anspruch 6 oder 7, **dadurch gekennzeichnet, dass** die Relativbewegung als Relativdrehung ausgeführt wird.

9. Verfahren nach einem der Ansprüche 6 bis 8, **dadurch gekennzeichnet, dass** die Relativbewegung als Längsverschiebung ausgeführt wird.

## Claims

1. Apparatus (1, 100) for producing plastic articles, in particular packaging, with a production device for a prefabricated intermediate product (18, 118, 33) and a stretching device,
comprising a stretching device (4, 28) designed for shear force initiation with a first handling unit (16, 116, 31, 34, 93) acting on a surface (18a, 118a, 33a) of the intermediate product (18, 118, 33) and a second handling unit (17, 217, 32, 35, 96) acting on a opposite surface (18b, 118b, 33b), which are movable relative to each other,
wherein to produce a plastic container, a preform (18, 118) with a centre axis (18', 118') and an inner and an outer surface (18a, 18b, 118a, 118b), a first handling unit (16, 116, 31, 96) acting at least partly on the inner surface (18a, 118a) and a second handling unit (17, 217, 32, 93) lying at least partly on the outer surface (18b, 118b) are provided, which can be twisted relative to each other about the centre axis (18', 118'),
wherein the first handling unit (16, 116, 31, 96) is a movable mandrel element lying on the inner surface (18a, 118a,) and the second handling unit (17, 217, 32, 93) is a mould which can be pressed onto the outer surface (18b, 118b), and
wherein the apparatus is arranged upstream of an apparatus for blow-moulding in the transport direction of the preforms or plastic articles, **characterised in that** the mandrel element is spreadable.

2. Apparatus according to claim 1, **characterised in that** for production of a plastic container, a preform (18, 118) with a centre axis (18', 118') and an inner and an outer surface (18a, 18b, 118a, 118b), a first handling unit (16, 116, 31) acting at least partly on the inner surface (18a, 118a) and a second handling unit (17, 217, 32) lying at least partly on the outer surface (18b, 118b) are provided, which are movable relative to each other along the centre axis (18').

3. Apparatus according to claim 1 or 2, **characterised in that** the first handling unit (31) is an inner mould of an injection moulding tool and the second handling unit (32) is an outer mould of the injection moulding tool, wherein the inner mould and outer mould are movable, preferably twistable, relative to each other.

4. Apparatus according to any of claims 1 to 3, **characterised in that** at least one handling unit (16, 17, 116, 217, 31, 32, 34, 35, 93, 96) is connected to a heating and/or cooling circuit for tempering the intermediate product (18, 118, 33).

5. Method for producing plastic articles, in particular packaging, **characterised in that** an apparatus according to any of claims 1 to 4 is used for performance of the method.

6. Method according to claim 5, **characterised in that** the shear force is initiated by a relative movement of handling units (16, 17, 116, 217, 31, 32, 34, 35, 93, 96) coupled by friction fit on opposite surfaces of the intermediate product (18, 118,33).

7. Method according to claim 5 or 6, **characterised in that** the shear force is initiated by a relative movement of handling units (16, 17, 116, 217, 31, 32, 34, 35, 93, 96) coupled by form fit on opposite surfaces of the intermediate product (18, 118, 33).

8. Method according to claim 6 or 7, **characterised in that** the relative movement is executed as a relative twist.

9. Method according to any of claims 6 to 8, **characterised in that** the relative movement is executed as a longitudinal displacement.

## Revendications

1. Dispositif (1, 100) pour la production d'articles en matière plastique, notamment des emballages, comprenant un dispositif de fabrication pour un produit intermédiaire préfabriqué (18, 118, 33) et un dispositif à étirer,
présentant un dispositif à étirer (4, 28) conçu pour initier des forces de cisaillement dans le produit, avec une première unité de traitement (16, 116, 31, 34, 93) agissant sur une surface (18a, 118a, 33a) du produit intermédiaire (18, 118, 33), et une deuxième unité de traitement (17, 217, 32, 35, 96) agissant sur une surface (18b, 118b, 33b) opposée, les unités de traitement étant mobiles relativement l'une par rapport à l'autre, dispositif
dans lequel pour la production d'un contenant ou récipient en matière plastique, sont prévues une préforme (18, 118) présentant un axe central (18', 118') ainsi qu'une surface intérieure et extérieure (18a, 18b, 118a, 118b), une première unité de traitement (16, 116, 31, 96) agissant au moins partiellement sur la surface intérieure (18a, 118a), et une deuxième unité de traitement (17, 217, 32, 93) appliquée au moins partiellement contre la surface extérieure (18b, 118b), qui peuvent tourner relativement l'une par rapport à l'autre autour de l'axe central (18', 118'),
dans lequel la première unité de traitement (16, 116, 31, 96) est un élément de mandrin mobile, s'appliquant contre la surface intérieure (18a, 118a), et la deuxième unité de traitement (17, 217, 32, 93) est un moule pouvant être pressé contre la surface extérieure (18b, 118b), et
dans lequel le dispositif est agencé, en se référant à la direction de transport des préformes ou des articles en matière plastique, avant un dispositif de moulage par soufflage,
**caractérisé en ce que** l'élément de mandrin est expansible.

2. Dispositif selon la revendication 1, **caractérisé en ce que** pour la production d'un contenant ou récipient en matière plastique, sont prévues une préforme (18, 118) présentant un axe central (18', 118') ainsi qu'une surface intérieure et extérieure (18a, 18b, 118a, 118b), une première unité de traitement (16, 116, 31) agissant au moins partiellement sur la surface intérieure (18a, 118a) et une deuxième unité de traitement (17, 217, 32) appliquée au moins partiellement contre la surface extérieure (18b, 118b), qui peuvent coulisser relativement l'une par rapport à l'autre le long de l'axe central (18').

3. Dispositif selon la revendication 1 ou la revendication 2, **caractérisé en ce que** la première unité de traitement (31) est un moule intérieur d'un outillage de moulage par injection, et la deuxième unité de traitement (32) est un moule extérieur de l'outillage de moulage par injection, le moule intérieur et le moule extérieur étant mobiles relativement l'un par rapport à l'autre, de préférence en rotation.

4. Dispositif selon l'une des revendications 1 à 3, **caractérisé en ce qu'**au moins une unité de traitement (16, 17, 116, 217, 31, 32, 34, 35, 93, 96) est reliée à un circuit de chauffage et/ou de refroidissement pour tempérer le produit intermédiaire (18, 118, 33).

5. Procédé de production d'articles en matière plastique, notamment des emballages, **caractérisé en ce que** l'on utilise un dispositif selon l'une des revendications 1 à 4 pour la mise en oeuvre du procédé.

6. Procédé selon la revendication 5, **caractérisé en ce que** pour initier des forces de cisaillement dans le produit, on effectue un mouvement relatif d'unités de traitement (16, 17, 116, 217, 31, 32, 34, 35, 93, 96) couplées par adhérence à des surfaces opposées du produit intermédiaire (18, 118, 33).

7. Procédé selon la revendication 5 ou la revendication 6, **caractérisé en ce que** pour initier des forces de cisaillement dans le produit, on effectue un mouvement relatif d'unités de traitement (16, 17, 116, 217, 31, 32, 34, 35, 93, 96) couplées par complémentarité de formes à des surfaces opposées du produit intermédiaire (18, 118, 33).

8. Procédé selon la revendication 6 ou la revendication 7, **caractérisé en ce que** le mouvement relatif est exécuté sous forme de mouvement de rotation relatif.

9. Procédé selon l'une des revendications 6 à 8, **caractérisé en ce que** le mouvement relatif est exécuté sous forme de coulissement longitudinal.
